# EUROPEAN PATENT SPECIFICATION

(11) **EP 3 847 902 B1**
(45) Date of publication and mention of the grant of the patent: **12.11.2025**
(21) Application number: 20151028.6
(22) Date of filing: 09.01.2020
(51) Int. Cl.: A23L 5/30, A23L 31/00, A23L 33/155

(54) **APPARATUS FOR INCREASING THE CONTENT OF ERGOSTEROL-DERIVED PHOTOPRODUCTS IN MUSHROOM PRODUCTS AND A METHOD FOR INCREASING THE CONTENT OF ERGOSTEROL-DERIVED PHOTOPRODUCTS IN MUSHROOM PRODUCTS**
VORRICHTUNG ZUR ERHÖHUNG DES GEHALTS VON FOTOPRODUKTEN AUS ERGOSTEROL IN PILZPRODUKTEN UND VERFAHREN ZUR ERHÖHUNG DES GEHALTS VON FOTOPRODUKTEN AUS ERGOSTEROL IN PILZPRODUKTEN
APPAREIL PERMETTANT D'AUGMENTER LA TENEUR EN PHOTOPRODUITS DÉRIVÉS D'ERGOSTÉROL DANS DES PRODUITS DE CHAMPIGNONS ET PROCÉDÉ PERMETTANT D'AUGMENTER LA TENEUR EN PHOTOPRODUITS DÉRIVÉS D'ERGOSTÉROL DANS DES PRODUITS DE CHAMPIGNONS

(43) Date of publication of application: 14.07.2021
(73) Proprietor: Luxidum GmbH, 74594 Kressberg (DE)
(72) Inventor: URBAIN, Paul, 74594 Kressberg (DE)
(74) Representative: Gleim Petri Patent- und Rechtsanwaltspartnerschaft mbB

(56) References cited:
- CN-A- 109 527 121
- CN-A- 109 527 530
- US-A1- 2009 274 806
- MICHAEL D KALARAS ET AL: "Generation of potentially bioactive ergosterol-derived products following pulsed ultraviolet light exposure of mushrooms ()", FOOD CHEMISTRY, ELSEVIER LTD, NL, vol. 135, no. 2, 26 April 2012 (2012-04-26), pages 396 - 401, XP028427171, ISSN: 0308-8146, [retrieved on 20120507], DOI: 10.1016/J.FOODCHEM.2012.04.132
- JASINGHE V J ET AL: "Ultraviolet irradiation: The generator of Vitamin D"2 in edible mushrooms", FOOD CHEMISTRY, ELSEVIER LTD, NL, vol. 95, no. 4, 1 April 2006 (2006-04-01), pages 638 - 643, XP027989141, ISSN: 0308-8146, [retrieved on 20060401]

## Description

The invention relates to an apparatus for increasing the content of ergosterol-derived photoproducts and a method for increasing the content of ergosterol-derived photoproducts in mushroom products according to the respective independent claim.

This invention relates to the field of mushroom products, more particularly, methods, systems, and compositions for enhancing the vitamin D content of a mushroom product.

It is known that mushrooms contain high levels of ergosterol, the principal sterol in fungi, and on exposure to wavelengths <315 nm from the sun or artificial lighting this provitamin D2 compound is converted through a photochemical reaction to previtamin D2, followed by thermal isomerization to vitamin D2 (Havinga et al.; Tetrahedron 1960).

The process of production of vitamin D2 in mushrooms resembles the process of conversion of cutaneous provitamin D3 in humans ultimately to vitamin D3. The conversion rate of ergosterol to vitamin D2 under UV irradiation depends on the UV spectrum (UV-B or -C), irradiation dose, moisture content and the mushrooms' orientation toward the UV source (Jasinghe and Perera; Food Chem 2006; Roberts et al.; J Agric Food Chem 2008).

Not only is UV light able to convert ergosterol to vitamin D2 in yeast, UV light (240-280 nm) is well known to inactivate and kill many microbes including viruses, bacteria, molds and yeast (Clark et al.; Appl Environ Microbiol 2012).

Wild mushrooms can naturally contain ample amounts of vitamin D2 at harvest, depending on factors such as growing site (sun exposure vs shady), season, region, weather conditions, and species (Mattila et al.; J Agric Food Chem 1994; Teichmann et al.; Eur J Clin Nutr 2007). Differences in these factors likely explain the extreme differences of vitamin D2 content detected in wild mushrooms of the same species and sold on the market. For example, wild maitake mushrooms (Grifola frondosa) have been reported with vitamin D2 content in the range from <2 to 63 µg/100 g fresh weight (FW) (Phillips et al.; J Agric Food Chem 2011). In contrast, cultured mushrooms are mainly cultivated indoors in darkness; their vitamin D2 content is almost nil.

The sun-drying of mushrooms for the purpose of preservation has been practiced for thousands of years all over the world, and there is ample evidence of their safe consumption. This has been the case, however, without people being aware of the fact that the practice led to the production of a foodstuff rich in vitamin D (Teichmann et al.; Lebensm Wiss Technol 2007).

One of the first reports on the enrichment of vitamin D2 in edible mushrooms via artificial UV irradiation was published in 1998 by Mau and colleagues (Mau et al.; J Agric Food Chem 1998). However, the use of UV light for the large-scale production of vitamin D2 and D3 from their provitamins ergosterol and 7-dehydrocholesterol isolated from baker's yeast and sheep's wool lanolin, respectively, has a much longer history.

Studies demonstrated a significantly higher yield of vitamin D2 in sliced compared to whole mushrooms (Kalaras et al.; Food Chem 2012) and data on artificial UV-B exposure of mushroom powder revealed extremely high yields in vitamin D2 content (498 µg/g dry weight) (Wu and Ahn; PLoS ONE 2014), showing the essentiality of the ratio of UV light exposure area to mass.

In 1999, Outila et al. (Am J Clin Nutr 1999) were the first to demonstrate that vitamin D2 was well absorbed from wild edible mushrooms in humans. Twelve years later, the first study investigating the bioavailability of vitamin D2 from UV-exposed and vitamin D2-enriched mushrooms in humans was published by the applicant (Urbain et al.; Eur J Clin Nutr 2011). They demonstrated that that the bioavailability of vitamin D2 from vitamin D2-enhanced button mushrooms via UV-B irradiation was effective in improving vitamin D status and not different to a vitamin D2 supplement.

The two-stage laser photolysis using narrow spectral width laser sources published by Malatesta et al. in 1981 consisted of firstly a long time irradiation of a solution of 7-dehydrocholesterol in 02-free diethyl ether (0 °C) with a wavelength of 248 nm till a photostationary state resulting in a conversion rate of about 97% of the initial substance with mainly tachysterol (71%) and previtamin D3 (26%) (Malatesta et al.; J Am Chem Soc 1981). The second photolysis was performed at room temperature (20°C) by either one of the following UV-A wavelengths (337 nm or 353 nm) with very long irradiation times of 95 min or 180 min, resulting in a high isomerization rate from tachysterol to previtamin D3 with very low final yields of tachysterol (<12%) and lumisterol (<10%). No data were published about the thermal isomerization rate of previtamin D3 to vitamin D3.

The applicant found a positive correlation between vitamin D2 and vitamin D4 production during the artificial UV irradiation of mushroom slices, although to a much lower but nevertheless relevant degree (Urbain et al.; Plant Foods Hum Nutr 2016).

In 1960 Havinga et al. irradiated solutions of four isomers of ergosterol with different wavelengths (Havinga et al.; Tetrahedron 1960). UV light of 280, 297 and 302 nm gave a high yield of vitamin D, light of shorter wavelength (254 nm) yielded mainly in tachysterol and light of longer wavelength (313 nm) caused production of predominantly lumisterol. Highest yield of previtamin D was observed at 297 nm.

Kalaras et al. (Food Chem 2012) investigated for the first time the relationship between vitamin D2 production and the production of ergosterol-derived products in fresh mushrooms when irradiated with broadband pulsed UV light (B-type lamp), which excluded wavelengths in the UV-C region. They found an increase of the major photoproducts (previtamin D2, lumisterol2 and tachysterol2 in order of decreasing abundance) as a function of the UV dose.

In concordance with Norval et al. (Photochem Photobiol Sci 2010) the main reaction product observed at all dose levels is vitamin D2 followed by previtamin D2, lumisterol and tachysterol respectively.

Conversion of ergosterol to vitamin D2 and further photoproducts takes place according to the known reaction scheme (see Fig. 5). The conversion of ergosterol to vitamin D2 (ergocalciferol) is initiated upon exposure of the precursor ergosterol (provitamin D2) to UV irradiation (photolysis), which results in cleavage and opening of the B-ring to yield previtamin D2. Previtamin D2 is thermally labile and can isomerize to vitamin D2 by a thermally induced sigmatropic shift (Eyley and Williams; J Chem Soc Chem Commun 1975).

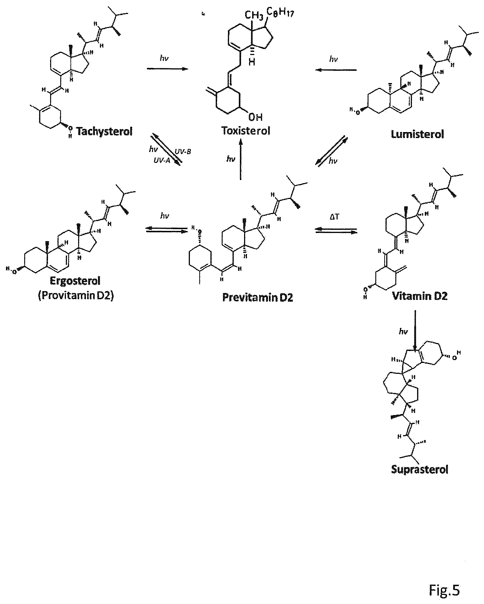

Fig. 5 shows the known reaction scheme of the photoproducts of ergosterol. The conversion of ergosterol to vitamin D2 (ergocalciferol) is initiated upon exposure of the precursor ergosterol (provitamin D2) to UV irradiation (photolysis), which results in cleavage and opening of the B-ring to yield previtamin D2. Previtamin D2 is thermally labile and can isomerize to vitamin D2 by a thermally induced sigmatropic shift. Through extended exposure to UV irradiation, previtamin D2 can also undergo ring closure to form lumisterol, a stereoisomer of ergosterol. Tachysterol is another photoproduct of this photochemical reaction and is structurally similar to vitamin D2. Other photoproducts such as toxisterols and suprasterols are formed upon prolonged irradiation of previtamin D and its photoisomers.

Through extended exposure to UV irradiation, previtamin D2 can also undergo ring closure to form lumisterol, a stereoisomer of ergosterol. Tachysterol is another photoproduct of this photochemical reaction and is structurally similar to vitamin D2. Other photoproducts such as toxisterols and suprasterols are formed upon prolonged irradiation of previtamin D and its photoisomers (Boomsma et al.; Recueil des Travaux Chimiques des Pays-Bas 2010).

Tachysterol acts mainly as a "sun shield" suppressing previtamin D formation. Tachysterol shows stronger toxisterol formation than previtamin D and can thus be seen as the major degradation route of vitamin D. Contrary to the "sun shield" effect, tachysterol can be a source of previtamin D when only low energy ultraviolet light is available, as it is the case in winter or in the morning and evening hours of the day (Cisneros et al.; Phys Chem Chem Phys 2017).

Due to the structural similarity of these vitamin D2 analogues, it may be plausible that these photoisomers are of biological relevance, regarding eg. regulation of intestinal calcium transport or bone calcium mobilization (Holick et al.; Science 1973).

The universally recognised action spectrum for the UV-induced conversion of 7-dehydrocholesterol to previtamin D3 in human skin was published in 1982 (MacLaughlin et al.; Science 1982). The optimum wavelengths for the production of previtamin D3 were found to be between 295 and 300 nm with a maximum at 297 nm. There was no production detected below 260 nm or above 315 nm.

Experiments with monochromatic irradiation of a solution of 7-dehydrocholesterol (provitamin D3) revealed that the production of previtamin D3 is favoured at 295 nm, tachysterol at 260 nm and lumisterol at 310 nm (Holick et al.; The Science of Photomedicine. Photobiology 1982).

In 2010 researchers performed a review of the molar extinction coefficients in ethanol of ergosterol (provitamin D2) and calculated percentages of previtamin D3, lumisterol and tachysterol in the photostationary state based on wavelength used for irradiation (Norval et al.; Photochem Photobiol Sci 2010). While the reaction previtamin D3 to tachysterol is favoured over previtamin D3 to lumisterol and previtamin D3 to 7-dehydrocholesterol by about 10 : 1 over the UV-C waveband, the quantum yield for the back reaction tachysterol to previtamin D3 is high at longer wavelengths. In addition, virtually no lumisterol was produced in the UV-C range (254 nm) while, at longer UV-B wavelengths (310 nm), less tachysterol was produced. Highest conversion rates to previtamin D3 were found at the wavelengths 295 nm and 300 nm.

Further state of the art is given by the following patent documents: CN 109 527 530 A, US 2009/274806 A1 and CN 109 527 121 A.

In conclusion, the reaction of ergosterol to its photoproducts in mushroom products depends in regard to the reaction pathway as well as the occurring by-products upon the spectral characteristics of the used light and the irradiation time.

It is an object of the invention to maximize the content (synthesis) of vitamin D2 while minimizing the content of further ergosterol-derived photoproducts (eg. vitamin D4, lumisterol, tachysterol, toxisterol, suprasterol). It is a further object of the invention to implement the best combination of different peak wavelengths regarding highest vitamin D2 synthesis and lowest production of undesired photoproducts (eg. vitamin D4, lumisterol, tachysterol, toxisterol, suprasterol) in mushroom products.

This problem is solved by an apparatus for increasing the content of ergosterol-derived photoproducts in mushroom products and a method for increasing the content of ergosterol-derived photoproducts in mushroom products according to the respective independent claims. The subject matter of the dependent claims comprises preferred aspects.

The invention comprises an apparatus for increasing the content of ergosterol-derived photoproducts in mushroom products, comprising of:
a. a conveyor capable of transporting the mushroom products;
b. at least two UV light sources, wherein

i. the first light source emitting light with a peak wavelength in the range of 250 nm and 320 nm so as to expose the transported mushroom products, and
ii. the second light source emitting light with a peak wavelength in the range of 250 nm and 320 nm so as to expose the transported mushroom products, and
iii. the first light source and the second light source emitting light with a different peak wavelength range,
wherein the first light source and the second light source is an LED assembly comprising multiple LED's, and wherein the density of LED's is between 0.05 to 4.0 LED per cm², wherein the apparatus is adapted to irradiate the mushroom product for a total time between 1 and 60 seconds and wherein the power of the light sources is set so that the vitamin D2 content of the mushroom products is between 1 and 40 µg per 100 g of fresh weight and between 100 and 8000 µg per g of dry weight.

The combination of different wavelengths allows for increasing the content of ergosterol-derived photoproducts of vitamin D2 while minimizing the content of further ergosterol-derived photoproducts like vitamin D4, lumisterol, tachysterol, toxisterol, suprasterol. The shown combination of different peak wavelengths achieve the highest vitamin D2 synthesis while maintaining the lowest production of undesired photoproducts like vitamin D4, lumisterol, tachysterol, toxisterol, suprasterol in mushroom products.

Preferably, the first light source is capable of emitting one of the following peak wavelengths: 250 nm, 255 nm, 260 nm, 265, 270, 275, 280, 285, 290, 295, 300, 305, 310, 315, 320 nm with peak wavelength deviation of ± 3 nm. Experimental data have shown that by providing the above mentioned wavelength steps the content of ergosterol-derived photoproducts including vitamin D2 can be increased in a most efficient way.

Preferably, the second light source is capable of emitting one of the following peak wavelengths: 250, 255, 260, 265, 270, 275, 280, 285, 290, 295, 300, 305, 310, 315, 320 nm with peak wavelength deviation of ± 3 nm. Experimental data have shown that by providing the above mentioned wavelength steps in particular in combination with those for the first light source, the content of ergosterol-derived photoproducts including vitamin D2 can be increased in a most efficient way.

Advantageously, the first light source and the second light source emit different peak wavelength of combinations of: 250 nm, 255 nm, 260 nm, 265 nm, 270 nm, 275 nm, 280 nm, 285 nm, 290 nm, 295 nm, 300 nm, 305 nm, 310 nm, 315 nm, 320 nm.

Another advantageous aspect relates to that the first light source and the second light source is an LED assembly comprising multiple LED's, and wherein a percentage ratio of LED's with different peak wavelengths in the lamp assembly ranges from 5% to 95%.

Preferably, the first light source and the second light source are arranged in a distance from the conveyor in the range of 1 to 400 mm. The distance can be adjusted in regard to the percentage ratio of LED's or the density of LED's.

Another preferred aspect relates to that the conveying length for the transported mushroom product under the first light source or the second light source is between 50 and 2000 mm.

Another aspect of the invention relates to a method for increasing the content of ergosterol-derived photoproducts in mushroom products comprising the steps of:
- conveying the mushroom product through an apparatus according to any one of the preceeding claims, and
- irradiating the mushroom product for a total time between 1 and 60 seconds,
wherein the power of the light sources is set so that the vitamin D2 content of the mushroom products is between 1 and 40 µg per 100 g of fresh weight and between 100 and 8000 µg per g of dry weight.

Preferably, the mushroom product refers to any kind of mushroom species, and to various states of preparation including, but not limited to whole mushrooms, mushroom caps, sliced or diced mushrooms, mushroom powders, mushroom flours, fresh/raw mushrooms and/or blanched/sautéed mushrooms, and to all tissues of the aforementioned mushrooms, including tissues such as the mycelia, spores or vegetative cells, or any substrate for cultivating mushrooms in which ergosterol may be found.

Advantageously, the total UV irradiance is set so that the vitamin D2 content of the mushroom products is between 1 and 40 µg per 100 g of fresh weight and between 100 and 8000 µg per g of dry weight.

In another preferred aspect the distance between the light source and the mushroom product is set so that the vitamin D2 content of the mushroom products is between 1 and 40 µg per 100 g of fresh weight and between 100 and 8000 µg per g of dry weight.

The invention will be explained in more detail with reference to the accompanying figures, wherein the figures show:
- **Fig. 1**: is an apparatus for increasing the content of ergosterol-derived photoproducts in mushroom products;
- **Fig. 2**: is an apparatus for increasing the content of ergosterol-derived photoproducts in mushroom products;
- **Fig. 3**: is the apparatus according to Fig. 2 in a side view;
- **Fig. 4**: is an LED assembly for an apparatus for increasing the content of ergosterol-derived photoproducts in mushroom products; and
- **Fig. 5**: shows a known reaction scheme of the photoproducts of ergosterol.

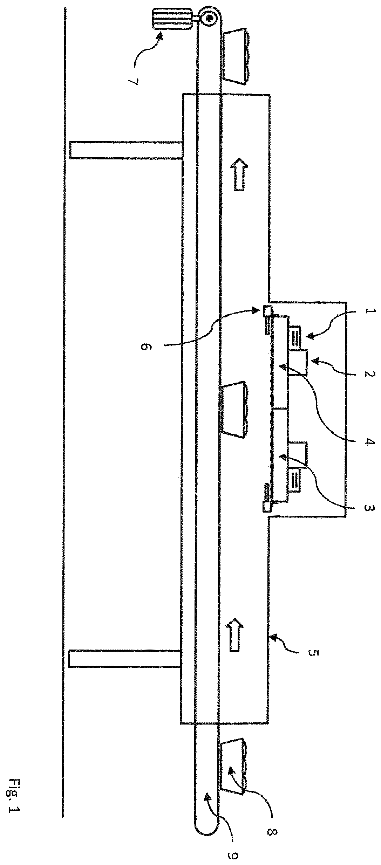

**Fig. 1** shows schematically an apparatus for increasing the content of ergosterol-derived photoproducts (eg. vitamin D2, vitamin D4, lumisterol, tachysterol, toxisterol) in mushroom products comprising a housing for protection of stray UV radiation 5. The mushroom products 8 are transported on a conveyor 9 which is powered by a conveyor drive motor 7. The central case of the housing 5 contains the lamp assembly with two UV light sources 3, 4. The light sources are narrow spectral width UV LEDs and the first UV light source 3 and second UV light source 4 have a light controller 1 and cooling fan 2. Each light source is controlled and continuously adjusted with a corresponding UV sensor 6.

The first and second light sources 3, 4 emit light with a peak wavelength in the range of 250 nm and 320 nm. The light sources 3, 4 emit light with a different peak wavelength of the following peak wavelengths: 250 nm, 255 nm, 260 nm, 265 nm, 270 nm, 275 nm, 280 nm, 285 nm, 290 nm, 295 nm, 300 nm, 305 nm, 310 nm, 315 nm, 320 nm with peak wavelength deviation of ± 3 nm.

The light sources 3, 4 are an LED assembly comprising multiple LED's, and wherein a percentage ratio of LED's with different peak wavelengths in the lamp assembly ranges from 5% to 95%. The density of LED's is between 0.05 to 4.0 LED per cm². The lamp assembly is arranged in a distance from the conveyor 9 in the range of 1 to 400 mm.

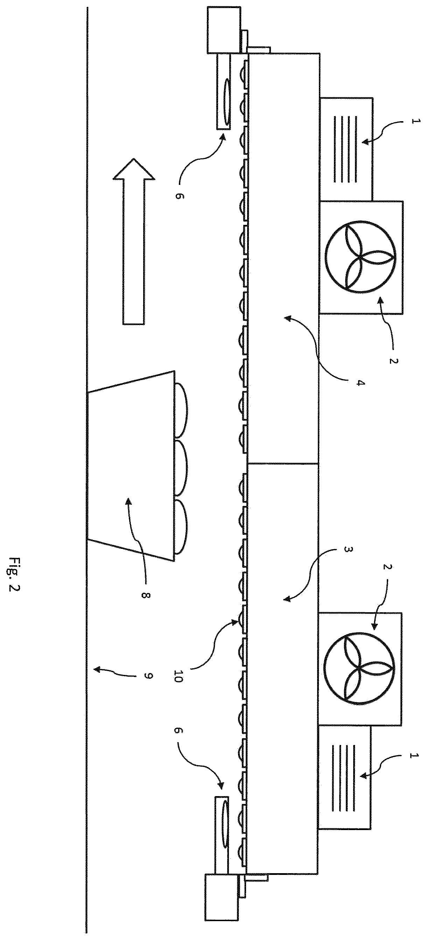

**Fig. 2** shows schematically the lamp assembly with two UV light sources 3, 4. The light sources are narrow spectral width UV LEDs 10 and the first 4 and second 3 UV light source have a light controller 1 and cooling fan 2. Each light source is controlled and continuously adjusted with a corresponding UV sensor 6. The mushroom product (8: punnet with fresh mushrooms) is placed on a conveyor 9 and passes the first UV light source 3 and then the second UV light source 4.

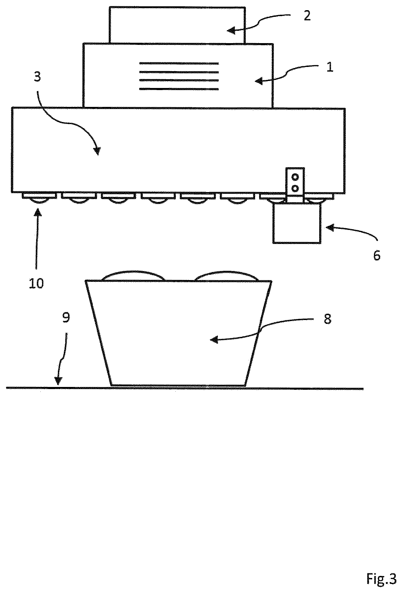

**Fig. 3** shows schematically the lamp assembly in a side view with the first UV light source 4 with the light controller 1, cooling fan 2, UV sensor 6 and the single LEDs 10. The width of each UV light source area covers at minimum the complete area of mushroom products 8 passing the apparatus for increasing the content of ergosterol-derived photoproducts.

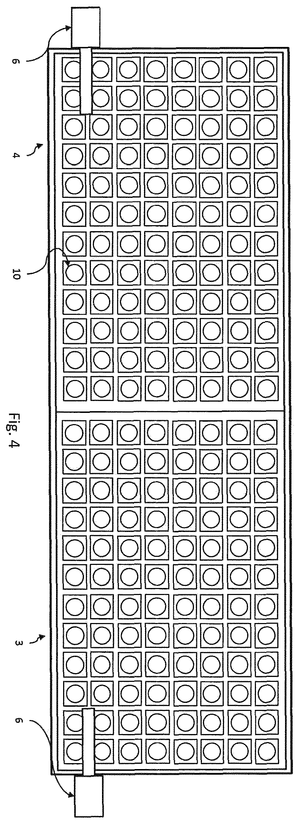

**Fig. 4** shows schematically the lamp assembly in a front view with the both UV light sources 3, 4. The LED placement density could be between 0.05 to 4.0 LED per cm2. The length of each light source area in the conveying direction could be between 50 and 2000 mm.

**Fig. 5** shows the reaction scheme of the photoproducts of ergosterol. The conversion of ergosterol to vitamin D2 (ergocalciferol) is initiated upon exposure of the precursor ergosterol (provitamin D2) to UV irradiation (photolysis), which results in cleavage and opening of the B-ring to yield previtamin D2. Previtamin D2 is thermally labile and can isomerize to vitamin D2 by a thermally induced sigmatropic shift. Through extended exposure to UV irradiation, previtamin D2 can also undergo ring closure to form lumisterol, a stereoisomer of ergosterol. Tachysterol is another photoproduct of this photochemical reaction and is structurally similar to vitamin D2. Other photoproducts such as toxisterols and suprasterols are formed upon prolonged irradiation of previtamin D and its photoisomers.

## Claims

1. Apparatus for increasing the content of ergosterol-derived photoproducts in mushroom products (8), comprising of:
a. a conveyor (9) capable of transporting the mushroom products (8);
b. at least two UV light sources (3,4), wherein
i. the first light source (3) emitting light with a peak wavelength in the range of 250 nm and 320 nm so as to expose the transported mushroom products (8), and
ii. the second light source (4) emitting light with a peak wavelength in the range of 250 nm and 320 nm so as to expose the transported mushroom products (8);
iii. the first light source (3) and the second light source (4) emitting light with a different peak wavelength range,
wherein the first light source (3) and the second light source (4) is an LED assembly comprising multiple LED's, wherein the density of LED's is between 0.05 to 4.0 LED per cm²,
wherein the apparatus is adapted to irradiate the mushroom product for a total time between 1 and 60 seconds
and wherein the power of the light sources is set so that the vitamin D2 content of the mushroom products is between 1 and 40 µg per 100 g of fresh weight and between 100 and 8000 µg per g of dry weight.

2. Apparatus according to claim 1, wherein the first light source (3) is capable of emitting one of the following peak wavelengths: 250 nm, 255 nm, 260 nm, 265 nm, 270 nm, 275 nm, 280 nm, 285 nm, 290 nm, 295 nm, 300 nm, 305 nm, 310 nm, 315 nm, 320 nm with peak wavelength deviation of ± 3 nm.

3. Apparatus according to claim 1 or 2, wherein the second light source (4) is capable of emitting one of the following peak wavelengths: 250 nm, 255 nm, 260 nm, 265 nm, 270 nm, 275 nm, 280 nm, 285 nm, 290 nm, 295 nm, 300 nm, 305 nm, 310 nm, 315 nm, 320 nm with peak wavelength deviation of ± 3 nm.

4. Apparatus according to claim 2 and 3, wherein the first light source (3) and the second light source (4) emit different peak wavelength of combinations of : 250 nm, 255 nm, 260 nm, 265 nm, 270 nm, 275 nm, 280 nm, 285 nm, 290 nm, 295 nm, 300 nm, 305 nm, 310 nm, 315 nm, 320 nm.

5. Apparatus according to any one of the previous claims, wherein the first light source (3) and the second light source (4) is an LED assembly comprising multiple LED's, and wherein a percentage ratio of LED's with different peak wavelengths in the lamp assembly ranges from 5% to 95%.

6. Apparatus according to any one of the proceeding claims, wherein the first light source (3) and the second light source (4) are arranged in a distance from the conveyor (9) in the range of 1 to 400 mm.

7. Apparatus according to any one of the proceeding claims, wherein the conveying length for the transported mushroom product under the first light source (3) or the second light source (4) is between 50 and 2000 mm.

8. A method for increasing the content of ergosterol-derived photoproducts in mushroom products comprising the steps of:
- conveying the mushroom product through an apparatus according to any one of the preceeding claims, and
- irradiating the mushroom product for a total time between 1 and 60 seconds,
wherein the power of the light sources is set so that the vitamin D2 content of the mushroom products is between 1 and 40 µg per 100 g of fresh weight and between 100 and 8000 µg per g of dry weight.

9. A method according to claim 8, wherein the mushroom product refers to any kind of mushroom species, and to various states of preparation including, but not limited to whole mushrooms, mushroom caps, sliced or diced mushrooms, mushroom powders, mushroom flours, fresh/raw mushrooms and/or blanched/sauteed mushrooms, and to all tissues of the aforementioned mushrooms, including tissues such as the mycelia, spores or vegetative cells, or any substrate for cultivating mushrooms in which ergosterol may be found.

10. A method according to claim 9, wherein the total UV irradiance is set so that the vitamin D2 content of the mushroom products is between 1 and 40 µg per 100 g of fresh weight and between 100 and 8000 µg per g of dry weight.

11. A method according to any one of the claims 8 to 10, wherein the distance between the light source and the mushroom product is set so that the vitamin D2 content of the mushroom products is between 1 and 40 µg per 100 g of fresh weight and between 100 and 8000 µg per g of dry weight.

12. Method any one of the claims 8 to 11, further comprising the step of continuously controlling each light source with a corresponding UV sensor.

## Patentansprüche

1. Vorrichtung zur Erhöhung des Gehalts an Ergosterin-abgeleiteten Photoprodukten in Pilzprodukten (8), umfassend:
a. eine Fördereinrichtung (9), welche in der Lage ist, die Pilzprodukte (8) zu befördern;
b. mindestens zwei UV-Lichtquellen (3, 4), wobei
i. die erste Lichtquelle (3) Licht mit einer Spitzenwellenlänge im Bereich von 250 nm bis 320 nm emittiert, um die beförderten Pilzprodukte (8) Strahlung auszusetzen, und
ii. die zweite Lichtquelle (4) Licht mit einer Spitzenwellenlänge im Bereich von 250 nm bis 320 nm emittiert, um die beförderten Pilzprodukte (8) Strahlung auszusetzen;
iii. die erste Lichtquelle (3) und die zweite Lichtquelle (4) Licht mit einem unterschiedlichen Spitzenwellenlängenbereich emittieren,
wobei die erste Lichtquelle (3) und die zweite Lichtquelle (4) eine LED-Baugruppe sind, die mehrere LEDs enthält, wobei die Dichte der LEDs zwischen 0,05 und 4,0 LEDs pro cm² liegt,
wobei die Vorrichtung dazu ausgelegt ist, das Pilzprodukt für eine Gesamtzeitdauer zwischen 1 und 60 Sekunden zu bestrahlen,
und wobei die Leistung der Lichtquellen so festgelegt ist, dass der Vitamin-D2-Gehalt der Pilzprodukte zwischen 1 µg und 40 µg pro 100 g Frischgewicht und zwischen 100 µg und 8000 µg pro 1 g Trockengewicht liegt.

2. Vorrichtung nach Anspruch 1, wobei die erste Lichtquelle (3) in der Lage ist, eine der folgenden Spitzenwellenlängen von 250 nm, 255 nm, 260 nm, 265 nm, 270 nm, 275 nm, 280 nm, 285 nm, 290 nm, 295 nm, 300 nm, 305 nm, 310 nm, 315 nm, 320 nm mit einer Spitzenwellenlängenabweichung von ± 3 nm zu emittieren.

3. Vorrichtung nach Anspruch 1 oder 2, wobei die zweite Lichtquelle (4) in der Lage ist, eine der folgenden Spitzenwellenlängen von 250 nm, 255 nm, 260 nm, 265 nm, 270 nm, 275 nm, 280 nm, 285 nm, 290 nm, 295 nm, 300 nm, 305 nm, 310 nm, 315 nm, 320 nm mit einer Spitzenwellenlängenabweichung von ± 3 nm zu emittieren.

4. Vorrichtung nach Anspruch 2 und 3, wobei die erste Lichtquelle (3) und die zweite Lichtquelle (4) unterschiedliche Spitzenwellenlängen der Kombinationen von 250 nm, 255 nm, 260 nm, 265 nm, 270 nm, 275 nm, 280 nm, 285 nm, 290 nm, 295 nm, 300 nm, 305 nm, 310 nm, 315 nm, 320 nm emittieren.

5. Vorrichtung nach einem der vorstehenden Ansprüche, wobei die erste Lichtquelle (3) und die zweite Lichtquelle (4) eine LED-Baugruppe mit mehreren LEDs sind, und wobei ein prozentualer Anteil der LEDs mit unterschiedlichen Spitzenwellenlängen in der Leuchtenbaugruppe zwischen 5 % und 95 % liegt.

6. Vorrichtung nach einem der vorstehenden Ansprüche, wobei die erste Lichtquelle (3) und die zweite Lichtquelle (4) in einem Abstand in dem Bereich von 1 mm bis 400 mm von der Fördereinrichtung (9) angeordnet sind.

7. Vorrichtung nach einem der vorstehenden Ansprüche, wobei die Beförderungsstrecke für das beförderte Pilzprodukt unter der ersten Lichtquelle (3) oder der zweiten Lichtquelle (4) zwischen 50 mm und 2000 mm beträgt.

8. Verfahren zur Erhöhung des Gehalts an Ergosterin-abgeleiteten Photoprodukten in Pilzprodukten, umfassend die folgenden Schritte:
- Befördern des Pilzprodukts durch eine Vorrichtung gemäß einem der vorstehenden Ansprüche, und
- Bestrahlen des Pilzprodukts für eine Gesamtzeitdauer zwischen 1 und 60 Sekunden,
wobei die Leistung der Lichtquellen so festgelegt ist, dass der Vitamin-D2-Gehalt der Pilzprodukte zwischen 1 µg und 40 µg pro 100 g Frischgewicht und zwischen 100 µg und 8000 µg pro 1 g Trockengewicht liegt.

9. Verfahren nach Anspruch 8, wobei sich das Pilzprodukt auf eine beliebige Pilzart und auf verschiedene Vorbereitungszustände bezieht, einschließlich, aber nicht beschränkt auf ganze Pilze, Pilzköpfe, geschnittene oder gewürfelte Pilze, Pilzpulver, Pilzmehle, frische/rohe Pilze und/oder blanchierte/sautierte Pilze, und auf alle Gewebe der vorgenannten Pilze, einschließlich Gewebe wie Myzel, Sporen oder vegetative Zellen, oder ein beliebiges Substrat zur Pilzzucht, in dem Ergosterin vorkommen kann.

10. Verfahren nach Anspruch 9, wobei die UV-Gesamtbestrahlungsstärke so festgelegt ist, dass der Vitamin-D2-Gehalt der Pilzprodukte zwischen 1 µg und 40 µg pro 100 g Frischgewicht und zwischen 100 µg und 8000 µg pro 1 g Trockengewicht liegt.

11. Verfahren nach einem der Ansprüche 8 bis 10, wobei der Abstand zwischen der Lichtquelle und dem Pilzprodukt so festgelegt ist, dass der Vitamin-D2-Gehalt der Pilzprodukte zwischen 1 µg und 40 µg pro 100 g Frischgewicht und zwischen 100 µg und 8000 µg pro 1 g Trockengewicht liegt.

12. Verfahren nach einem der Ansprüche 8 bis 11, das ferner den Schritt des kontinuierlichen Steuerns jeder Lichtquelle mit einem entsprechenden UV-Sensor umfasst.

## Revendications

1. Dispositif destiné à augmenter la teneur en photoproduits dérivés de l'ergostérol dans des produits à base de champignons (8), comprenant :
a. un transporteur (9) capable de transporter les produits à base de champignons (8) ;
b. au moins deux sources de lumière UV (3, 4), dans lequel
i. la première source de lumière (3) émet une lumière dont la longueur d'onde de crête est comprise entre 250 nm et 320 nm afin d'exposer les produits à base de champignons (8) transportés à un rayonnement, et
ii. la deuxième source de lumière (4) émet une lumière dont la longueur d'onde de crête est comprise entre 250 nm et 320 nm afin d'exposer les produits à base de champignons (8) transportés à un rayonnement ;
iii. la première source de lumière (3) et la deuxième source de lumière (4) émettent une lumière dont la longueur d'onde de crête est différente,
la première source de lumière (3) et la deuxième source de lumière (4) étant un ensemble de DEL comprenant plusieurs DEL, la densité des DEL étant comprise entre 0,05 et 4,0 DEL par cm²,
le dispositif étant conçu pour irradier le produit à base de champignons pendant une durée totale comprise entre 1 et 60 secondes,
et la puissance des sources de lumière étant réglée de telle sorte que la teneur en vitamine D2 des produits à base de champignons soit comprise entre 1 µg et 40 µg pour 100 g de poids frais et entre 100 µg et 8000 µg pour 1 g de poids sec.

2. Dispositif selon la revendication 1, dans lequel la première source de lumière (3) est capable d'émettre l'une des longueurs d'onde de crête suivantes : 250 nm, 255 nm, 260 nm, 265 nm, 270 nm, 275 nm, 280 nm, 285 nm, 290 nm, 295 nm, 300 nm, 305 nm, 310 nm, 315 nm, 320 nm avec un écart de longueur d'onde de crête de ± 3 nm.

3. Dispositif selon la revendication 1 ou 2, dans lequel la deuxième source de lumière (4) est capable d'émettre l'une des longueurs d'onde de crête suivantes : 250 nm, 255 nm, 260 nm, 265 nm, 270 nm, 275 nm, 280 nm, 285 nm, 290 nm, 295 nm, 300 nm, 305 nm, 310 nm, 315 nm, 320 nm avec un écart de longueur d'onde de crête de ± 3 nm.

4. Dispositif selon les revendications 2 et 3, dans lequel la première source de lumière (3) et la deuxième source de lumière (4) émettent différentes longueurs d'onde de crête des combinaisons suivantes : 250 nm, 255 nm, 260 nm, 265 nm, 270 nm, 275 nm, 280 nm, 285 nm, 290 nm, 295 nm, 300 nm, 305 nm, 310 nm, 315 nm, 320 nm.

5. Dispositif selon l'une des revendications précédentes, dans lequel la première source de lumière (3) et la deuxième source de lumière (4) sont un ensemble de DEL comprenant plusieurs DEL, et dans lequel le pourcentage de DEL ayant des longueurs d'onde de crête différentes dans l' ensemble d'éclairage est compris entre 5 % et 95 %.

6. Dispositif selon l'une des revendications précédentes, dans lequel la première source de lumière (3) et la deuxième source de lumière (4) sont disposées à une distance comprise entre 1 mm et 400 mm du transporteur (9).

7. Dispositif selon l'une des revendications précédentes, dans lequel la distance de transport du produit à base de champignons transporté sous la première source de lumière (3) ou la deuxième source de lumière (4) est comprise entre 50 mm et 2000 mm.

8. Procédé pour augmenter la teneur en photoproduits dérivés de l'ergostérol dans des produits à base de champignons, comprenant les étapes suivantes :
- transporter le produit à base de champignons à travers un dispositif selon l'une des revendications précédentes, et
- irradiation du produit à base de champignons pendant une durée totale comprise entre 1 et 60 secondes,
la puissance des sources de lumière étant réglée de telle sorte que la teneur en vitamine D2 des produits à base de champignons soit comprise entre 1 µg et 40 µg pour 100 g de poids frais et entre 100 µg et 8000 µg pour 1 g de poids sec.

9. Procédé selon la revendication 8, dans lequel le produit à base de champignons se rapporte à n'importe quelle espèce de champignons et à différents états de préparation, y compris, mais sans s'y limiter, les champignons entiers, les têtes de champignons, les champignons coupés ou coupés en dés, la poudre de champignons, farines de champignons, champignons frais/crus et/ou champignons blanchis/sautés, et à tous les tissus des champignons susmentionnés, y compris les tissus tels que le mycélium, les spores ou les cellules végétatives, ou tout substrat de culture de champignons dans lequel l'ergostérol peut être présent.

10. Procédé selon la revendication 9, dans lequel l'intensité totale du rayonnement UV est réglée de telle sorte que la teneur en vitamine D2 des produits à base de champignons se situe entre 1 µg et 40 µg pour 100 g de poids frais et entre 100 µg et 8000 µg pour 1 g de poids sec.

11. Procédé selon l'une des revendications 8 à 10, dans lequel la distance entre la source de lumière et le produit à base de champignons est réglée de telle sorte que la teneur en vitamine D2 des produits à base de champignons se situe entre 1 µg et 40 µg pour 100 g de poids frais et entre 100 µg et 8000 µg pour 1 g de poids sec.

12. Procédé selon l'une des revendications 8 à 11, qui comprend en outre l'étape consistant à commander en continu chaque source de lumière à l'aide d'un capteur UV correspondant.
